# EUROPÄISCHE PATENTANMELDUNG

(11) **EP 4 851 022 A1**
(43) Veröffentlichungstag der Anmeldung: **09.12.2026**
(21) Anmeldenummer: 26174722.4
(22) Anmeldetag: 27.04.2026
(51) Int. Cl.: B62D 33/06, B60R 11/00

(54) **FAHRERKABINE FÜR EINE LANDWIRTSCHAFTLICHE ARBEITSMASCHINE SOWIE LANDWIRTSCHAFTLICHE ARBEITSMASCHINE**

(30) Priorität: 04.06.2025 DE 102025121779
(71) Anmelder: CLAAS Tractor S.A.S., 78141 Vélizy-Villacoublay Cedex (FR)
(72) Erfinder: Gicquel, Guénolè, 78690 Les Essarts-le-Roi (FR); Pommier, Benjamin, 78460 Chevreuse (FR); Benakopoulos, Stavros, 92120 Montrouge (FR); Villette, Clement, 58310 Bouhy (FR)
(74) Vertreter: CLAAS Gruppe

(57) **Zusammenfassung**

Die vorliegende Anmeldung betrifft eine Fahrzeugkabine (1) für eine landwirtschaftliche Arbeitsmaschine (2), insbesondere für einen Traktor, die Fahrzeugkabine (1) umfassend einen von Raumbegrenzungselementen (3) räumlich begrenzten Kabineninnenraum (4), einen innerhalb des Kabineninnenraums (4) angeordneten Fahrersitz (5), auf dem ein Fahrer der Arbeitsmaschine (2) während des bestimmungsgemäßen Betriebs der Arbeitsmaschine (2) sitzen kann, wobei eines der Raumbegrenzungselemente (3) von einer Windschutzscheibe (19) gebildet ist, die sich zwischen zwei A-Säulen (13) der Fahrzeugkabine (1) erstreckt, wobei ein anderes der Raumbegrenzungselemente (3) von einer Seitenscheibe (20) gebildet ist, die sich zwischen einer der A-Säulen (13) und einer B-Säule (14) der Fahrzeugkabine (1) erstreckt.

Um eine Fahrzeugkabine bereitzustellen, die dazu eingerichtet sein, jeweilige Komponenten bedarfsgerecht in dem Kabineninnenraum anordnen zu können, ohne dass das Sichtfeld des Fahrers durch die Windschutzscheibe unnötig beeinträchtigt wird, wird vorgeschlagen, dass in dem Kabineninnenraum (4) der Fahrzeugkabine (1) eine Halteeinrichtung (6) vorgesehen ist, die ein Schienensystem (7) umfasst, wobei das Schienensystem (7) zumindest zwei langgestreckte Schienen (8, 9, 10) mit identischem Schienenprofil sowie mindestens einen mit dem Schienenprofil kompatiblen Schlitten (11) zur Aufnahme, Führung und Halterung von Komponenten (12) aufweist, wobei eine erste Schiene (8) an der A-Säule (13) und eine zweite Schiene (9) zwischen der A-Säule (13) und der B-Säule (14) angeordnet sind.

## Beschreibung

Die vorliegende Anmeldung betrifft eine Fahrzeugkabine für eine landwirtschaftliche Arbeitsmaschine gemäß dem Oberbegriff von Anspruch 1. Ferner betrifft die vorliegende Anmeldung eine landwirtschaftliche Arbeitsmaschine gemäß Anspruch 10. Die landwirtschaftliche Arbeitsmaschine kann beispielsweise und vorzugsweise ein Traktor sein.

Die Fahrzeugkabine umfasst einen von Raumbegrenzungselementen räumlich begrenzten Kabineninnenraum. In dem Kabineninnenraum ist ein Fahrersitz der Fahrzeugkabine angeordnet, der dazu vorgesehen und eingerichtet ist, dass ein Fahrer der Arbeitsmaschine darauf sitzen kann, insbesondere zum Zweck der Steuerung der Arbeitsmaschine während ihres bestimmungsgemäßen Betriebs. Eines der Raumbegrenzungselemente, die den Kabineninnenraum einfassen, ist von einer Windschutzscheibe gebildet. Diese erstreckt sich in horizontale Richtung zwischen zwei A-Säulen der Fahrzeugkabine. Die Windschutzscheibe bildet ein vorderes Ende der Fahrzeugkabine, wobei der Fahrersitz in Richtung der Windschutzscheibe ausgerichtet ist, sodass ein auf dem Fahrersitz sitzender Fahrer nach vorne in Richtung der Windschutzscheibe blickt. Ein anderes der Raumbegrenzungselemente ist von einer Seitenscheibe gebildet. Diese erstreckt sich in horizontale Richtung zwischen einer der beiden A-Säulen und einer B-Säule der Fahrzeugkabine.

Fahrzeugkabinen sind im Stand der Technik bereits bekannt. Hierzu wird beispielhaft auf das europäische Patent EP 3 812 214 B1 hingewiesen. Dieses betrifft eine Halteeinrichtung für elektronische Geräte (diese bilden im Sinne der vorliegenden Anmeldung "Komponenten") in der Fahrzeugkabine einer landwirtschaftlichen Arbeitsmaschine. Die Halteeinrichtung umfasst einen L-förmigen Tragarm, der an zwei Raumbegrenzungselementen der Fahrzeugkabine befestigt ist und mehrere Haltepositionen für Komponenten wie Tablets oder Bedieneinheiten ermöglicht. Entlang des horizontalen Arms ist mindestens ein Schlitten verschiebbar geführt, der über ein Klemmprinzip positionsfest justierbar ist. Eine daran angebrachte Stützplatte erlaubt die flexible Ausrichtung der jeweiligen Komponente.

Nachteilig bei einer solchen Halteeinrichtung ist, dass die Komponenten stets im Bereich der Windschutzscheibe angeordnet sind, wodurch die Sicht des Fahrers durch die Windschutzscheibe erheblich beeinträchtigt wird. Die bekannte Halteeinrichtung ist weiterhin als nachteilig im Hinblick auf die Flexibilität der Positionierung von Komponenten anzusehen. Zudem besteht heutzutage der Bedarf nicht nur eine zusätzliche Komponente in der Fahrzeugkabine positionieren zu können, sondern gleich mehrere solcher Komponenten. Zudem ist es wünschenswert für den Fahrer diese Komponenten je nach durchzuführendem Arbeitseinsatz und der benötigten anzuzeigenden Informationen flexibel im Kabineninnenraum positionieren zu können.

Der vorliegenden Anmeldung liegt mithin die Aufgabe zugrunde, eine Fahrzeugkabine bereitzustellen, die Nachteile des Stands der Technik überwindet. Insbesondere soll die Fahrzeugkabine dazu eingerichtet sein, jeweilige Komponenten bedarfsgerecht in dem Kabineninnenraum anordnen zu können, ohne dass das Sichtfeld des Fahrers durch die Windschutzscheibe unnötig beeinträchtigt wird.

Die zugrunde liegende Aufgabe wird erfindungsgemäß mittels einer Fahrzeugkabine mit den Merkmalen des Anspruchs 1 gelöst. Vorteilhafte Ausgestaltungen ergeben sich aus den zugehörigen Unteransprüchen, der Beschreibung sowie dem Ausführungsbeispiel.

Zusätzlich zu den eingangs beschriebenen Merkmalen umfasst die Fahrzeugkabine ferner eine in dem Kabineninnenraum angeordnete Halteeinrichtung, die ein Schienensystem umfasst. Das Schienensystem umfasst mindestens zwei langgestreckte Schienen, die ein identisches Schienenprofil aufweisen.

Unter dem "Schienenprofil" ist im Sinne der vorliegenden Anmeldung der Profilquerschnitt der Schienen gemeint, der bei den Schienen des Schienensystems identisch ist.

Ferner umfasst das Schienensystem mindestens einen mit dem Schienenprofil der Schienen kompatiblen Schlitten, die zur Aufnahme, Führung und Halterung von Komponenten vorgesehen und eingerichtet ist. Die Kompatibilität der Schlitten zu dem Schienenprofil schlägt sich darin nieder, dass die Schlitten entlang der Schienen beweglich sind und mit dem Schienenprofil in solcher Weise eingreifen können, dass sie an der jeweiligen Schiene arretiert sind. Bevorzugt umfasst das Schienensystem eine Mehrzahl solcher Schlitten.

Unter den "Komponenten" werden im Sinne der vorliegenden Anmeldung insbesondere elektronische Geräte wie beispielsweise Bildschirme, Tablets, Eingabegeräte und dergleichen verstanden. Ebenfalls ist es denkbar, dass eine Komponente von einem nicht-elektronischen Bauteil gebildet ist, beispielsweise in einer Art Klemmbrett für das Festhalten von ausgedruckten Schriftstücken. Die Komponenten dienen im Allgemeinen dazu, dem Fahrer der Arbeitsmaschine Informationen anzuzeigen und/oder zur Eingabe von Informationen durch den Fahrer.

Eine erste Schiene des Schienensystems ist an einer der beiden A-Säulen der Fahrzeugkabine angeordnet. Insbesondere kann die erste Schiene an der jeweiligen A-Säule verschraubt sein. Somit erstreckt sich eine Längsachse der ersten Schiene zumindest im Wesentlichen in vertikale Richtung. Ferner ist eine zweite Schiene des Schienensystems zwischen einer der beiden A-Säulen und der B-Säule angeordnet, die zu dieser A-S0äule nächstgelegen ist. Hierbei handelt es sich in Fahrtrichtung der Arbeitsmaschine betrachtet um die B-Säule, die von dem Fahrersitz aus betrachtet auf derselben Seite (links oder rechts) angeordnet ist, auf der auch die jeweilige A-Säule sich befindet. Bevorzugt erstreckt sich die zweite Schiene in horizontale Richtung über die zwischen der A-Säule und der B-Säule befindliche Seitenscheibe der Fahrzeugkabine. Die zweite Schiene kann beispielsweise mit der Seitenscheibe verklebt oder verschraubt sein. Die zweite Schiene kann sich von der A-Säule bis zur B-Säule erstrecken und bis an beide Säulen heranreichen, das heißt mit diesen Säulen in Kontakt stehen. Auch ist es denkbar, dass sich die zweite Schiene lediglich über einen Teil eines horizontal gemessenen Abstands zwischen der A-Säule und der B-Säule erstreckt.

Bevorzugt umfasst die Fahrzeugkabine zwei A-Säulen, die in den zwei vorderen Ecken der Fahrzeugkabine angeordnet sind, und zwei B-Säulen, die in den zwei hinteren Ecken der Fahrzeugkabine angeordnet sind. Typischerweise erstreckt sich zwischen den beiden B-Säulen in horizontale Richtung eine Heckscheibe. Die Heckscheibe liegt der Windschutzscheibe gegenüber. Außerdem ist es üblich, dass zwischen einer der A-Säulen und einer der B-Säulen eine Tür angeordnet ist, durch die hindurch die Fahrzeugkabine betreten werden kann. Diese Tür liegt der Seitenscheibe gegenüber.

Die erfindungsgemäße Fahrzeugkabine hat viele Vorteile. Insbesondere ermöglicht sie die Anordnung von Komponenten außerhalb des Hauptsichtfelds des Fahrers der jeweiligen landwirtschaftlichen Arbeitsmaschine, sodass ein Blick des Fahrers durch die Windschutzscheibe nach vorne zumindest im Wesentlichen frei bleibt, das heißt nicht von mittels der Halteeinrichtung gehaltenen Komponenten blockiert wird. Mittels der ersten Schiene, die an der A-Säule angeordnet ist, ist ein idealer Kompromiss zwischen Sichtbarkeit einer jeweilig mittels eines Schlittens angebrachten Komponente und einem Einragen der Komponente in das Hauptsichtfeld des Fahrers gefunden. Somit bleibt die Sicht für den Fahrer nach vorne durch die Windschutzscheibe frei und gleichwohl die jeweilige Komponente, die an der ersten Schiene befestigt ist, optisch gut erfassbar, ohne dass der Fahrer den Kopf verdrehen muss. Für die Anordnung an der zweiten Schiene kommen vor allem Komponenten infrage, die unregelmäßig bzw. in größeren Zeitabständen von dem Fahrer betrachtet oder benutzt werden müssen, sodass ein seitlicher Blick auf den Bereich zwischen der A-Säule und der B-Säule zweckmäßig ist. Die Kopfbewegung des Fahrers ist hierbei vergleichbar zu einem Blick zur Seite durch die Seitenscheibe hindurch nach draußen. Das Hauptsichtfeld des Fahrers ist durch Komponenten, die an der zweiten Schiene angeordnet sind, gar nicht beeinträchtigt.

Im Übrigen ist die Anordnung von Komponenten an den Schienen des Schienensystems mittels der Schlitten des Schienensystems besonders komfortabel, da der Fahrer individuell einen jeweiligen Schlitten entlang einer Längsachse der jeweiligen Schiene positionieren und dort befestigen kann.

In vorteilhafter Ausgestaltung der Fahrzeugkabine ist ein weiteres Raumbegrenzungselement von einem Dach gebildet, wobei das Schienensystem eine weitere Schiene umfasst, die an einer Dachstruktur des Dachs angeordnet ist. Diese weitere Schiene erstreckt sich oberhalb der zweiten Schiene und ist vorzugsweise parallel zu der zweiten Schiene orientiert. Sofern in bevorzugter Ausgestaltung die zweite Schiene horizontal orientiert ist, ist es entsprechend vorteilhaft, wenn auch die weitere Schiene horizontal orientiert ist. Insbesondere kann sich die weitere Schiene in einem Bereich zwischen der A-Säule und der B-Säule erstrecken, zwischen denen sich auch die zweite Schiene erstreckt. Bevorzugt sind die zweite Schiene und die weitere Schiene in vertikale Richtung zumindest im Wesentlichen fluchtend übereinander angeordnet. Die weitere Schiene hat den Vorteil, dass die oberhalb eines Kopfbereichs eines auf dem Fahrersitz sitzenden Fahrers angeordnet ist und somit besonders gut dazu geeignet ist, Komponenten zu tragen, die vergleichsweise große in vertikale Richtung gemessene Abmessungen haben. Somit kann beispielsweise ein größerer Bildschirm in vorteilhafter Weise an der weiteren Schiene angeordnet werden, sodass dieser Bildschirm sich mit seinem oberen Ende in der Nähe der Dachstruktur findet und sich in seiner Höhe ausgehend von der Dachstruktur in vertikale Richtung nach unten erstreckt. Somit kann der auf dem Fahrersitz sitzenden Fahrer Informationen, die auf einem solchen Bildschirm dargestellt sind, besonders gut mittels eines Blicks nach leicht schräg oben erfassen, während das Hauptsichtfeld durch die Windschutzscheibe frei bleibt. Die an der Dachstruktur angeordnete weitere Schiene ist in dem nachstehend beschriebenen Ausführungsbeispiel als die "dritte Schiene" bezeichnet.

In vorteilhafter Ausgestaltung der Fahrzeugkabine umfasst das Schienensystem eine weitere Schiene, die an einer Armlehne des Fahrersitzes angeordnet ist. Diese weitere Schiene ist bevorzugt zumindest im Wesentlichen horizontal orientiert. Bevorzugt ist die weitere Schiene an der Armlehne des Fahrersitzes angeordnet, die sich bezogen auf die Sitzfläche des Fahrersitzes an der Seite des Fahrersitzes befindet, an der sich die zweite Schiene zwischen der A-Säule und der B-Säule erstreckt. Mit anderen Worten ist es bevorzugt, wenn die zweite Schiene und die an der Armlehne angeordnete weitere Schiene vom Fahrersitz aus betrachtet auf derselben Seite des Fahrersitzes angeordnet sind. Diese Anordnung hat den Vorteil, dass eine Komponente, die an der weiteren Schiene an der Armlehne des Fahrersitzes angeordnet ist, mittels derselben Kopfbewegung von dem Fahrer optisch erfasst werden kann, die der Fahrer auch für die Erfassung einer Komponente ausführt, die an der zweiten Schiene angeordnet ist. Auf diese Weise wird vermieden, dass der Fahrer für die Wahrnehmung verschiedener Informationen, die mittels verschiedener Komponenten angezeigt werden, in verschiedene Richtungen bezogen auf sein Hauptsichtfeld schauen muss. Beispielsweise ist es denkbar, dass an der weiteren Schiene an der Armlehne eine im Vergleich kleine Komponente angeordnet ist, die für die optische Erfassung bevorzugt möglichst nah an dem Kopf des Fahrers angeordnet ist, sodass er die mittels dieser Komponente dargestellten Informationen problemlos erfassen kann. Größere Komponenten sind demgegenüber bevorzugt an der ersten Schiene oder an der zweiten Schiene angeordnet, da sie trotz der größeren Entfernung zu dem Kopf des Fahrers optisch gut erfassbar sind, gleichzeitig jedoch weder das Bewegungsfeld noch das Blickfeld des Fahrers unnötig beeinträchtigen. Die Ausgestaltung des Schienensystems mit mehr als zwei Schienen, vorzugsweise mehr als drei Schienen, bietet mithin den Vorteil einer großen Flexibilität für den Fahrer, die jeweiligen Komponenten bedarfsgerecht in der Fahrzeugkabine anzuordnen, sodass deren Beobachtung komfortabel möglich ist.

In vorteilhafter Ausgestaltung der Fahrzeugkabine umfasst das Schienensystem eine weitere Schiene, die an der zweiten A-Säule angeordnet ist und sich analog zu der ersten Schiene erstreckt.

In vorteilhafter Ausgestaltung der Fahrzeugkabine weist das Schienensystem mindestens vier Schienen auf, nämlich die erste Schiene an der A-Säule, die zweite Schiene zwischen der A-Säule und der B-Säule, eine dritte Schiene an der Dachstruktur (wie vorstehend beschrieben) und eine vierte Schiene an der Armlehne des Fahrersitzes (wie vorstehend beschrieben).

In bevorzugter Ausgestaltung der Fahrzeugkabine ist das Schienenprofil mindestens einer der Schienen, vorzugsweise mehrere Schienen, weiter vorzugsweise alle Schienen, nach Art eines C-Profils ausgebildet. Schienen dieser Ausgestaltung sind besonders gut zur Zusammenwirkung mit Schlitten geeignet, die stufenlos entlang der Schienen bewegt und in einer wunschgemäßen Position an der Schiene fixiert werden können. Letzteres kann bevorzugt werkzeuglos erfolgen, beispielsweise durch die Herstellung eines Reibschlusses mittels eines Spannsystems.

**In** bevorzugter Ausgestaltung der Fahrzeugkabine ist mindestens eine der Schienen, vorzugsweise mehrere Schienen, weiter vorzugsweise alle Schienen, einstückig ausgebildet. Vorzugsweise sind die Schienen jeweils von einem Aluminiumstrangpressprofil oder einem extrudierten Kunststoffprofil gebildet. Diese Ausgestaltung ist für die Montage besonders einfach, wobei in der Fertigung die Schienen als Meterware bereitgestellt und je nach Bedarf abgelängt werden können, um als jeweilige Schiene (beispielsweise als erste Schiene oder als zweite Schiene) in dem Kabineninnenraum angebracht zu werden.

**In** bevorzugter Ausgestaltung der Fahrzeugkabine weisen alle Schienen des Schienensystems dasselbe Schienenprofil auf. Mit anderen Worten ist es von Vorteil, wenn alle Schienen denselben Profilquerschnitt aufweisen. Gemäß vorstehender Erläuterung ist es hierbei bevorzugt, wenn das Schienenprofil nach Art eines C-Profils ausgebildet ist. Die Ausgestaltung aller Schienen des Schienensystems mit identischem Schienenprofil hat den Vorteil, dass ein jeweiliger Schlitten an jeder der Schienen verwendbar ist.

In bevorzugter Ausgestaltung der Fahrzeugkabine ist der mindestens eine Schlitten entlang einer jeweiligen Schiene stufenlos beweglich und werkzeuglos an der Schiene befestigbar. Letzteres erfolgt bevorzugt mittels einer Spanneinrichtung, die händisch bedienbar ist, beispielsweise mittels eines Spannhebels, wodurch der Schlitten unter Ausbildung eines Reibschlusses an der Schiene arretiert werden kann.

In bevorzugter Ausgestaltung der Fahrzeugkabine weist das Schienensystem eine Mehrzahl an Schlitten auf, wobei wahlweise ein einer jeweiligen Schiene lediglich ein einziger Schlitten oder mehrere Schlitten angeordnet werden können. Auch ist es denkbar, dass einzelne Schienen frei bleiben, das heißt keine Schlitten an einer jeweiligen Schiene angeordnet sind. Die Anordnung von Schlitten an den Schienen kann individuell auf Wunsch des Fahrers erfolgen.

Die zugrundeliegende Aufgabe wird ferner mittels einer landwirtschaftlichen Arbeitsmaschine gelöst, deren Fahrzeugkabine gemäß der vorliegenden Erfindung oder einer ihrer vorteilhaften Ausgestaltungen ausgebildet ist. Die landwirtschaftliche Arbeitsmaschine kann beispielsweise und vorzugsweise ein Traktor sein. Die sich ergebenden Vorteile sind vorstehend bereits im Zusammenhang mit der Fahrzeugkabine beschrieben.

Die Erfindung ist nachstehend anhand eines Ausführungsbeispiels, das in den Figuren dargestellt ist, näher erläutert. Es zeigt:
- Fig. 1:: Eine Seitenansicht einer landwirtschaftlichen Arbeitsmaschine in Form eines Traktors,
- Fig. 2:: Eine schräge Ansicht einer Fahrzeugkabine des Traktors gemäß Figur 1,
- Fig. 3:: Eine perspektivische Ansicht von einem Teil eines Kabineninnenraums der Fahrzeugkabine gemäß Figur 2,
- Fig. 4:: Ein Detail eines Basismoduls eines Schlittens eines Schlittensystems einer Halteeinrichtung der Fahrzeugkabine gemäß Figur 2,
- Fig. 5:: Ein Detail einer A-Säule der Fahrzeugkabine gemäß Figur 2.

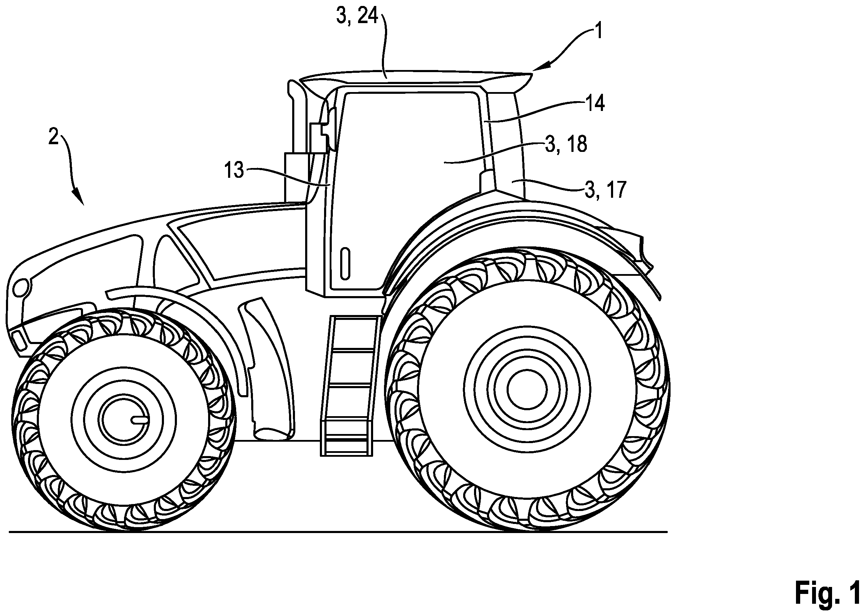

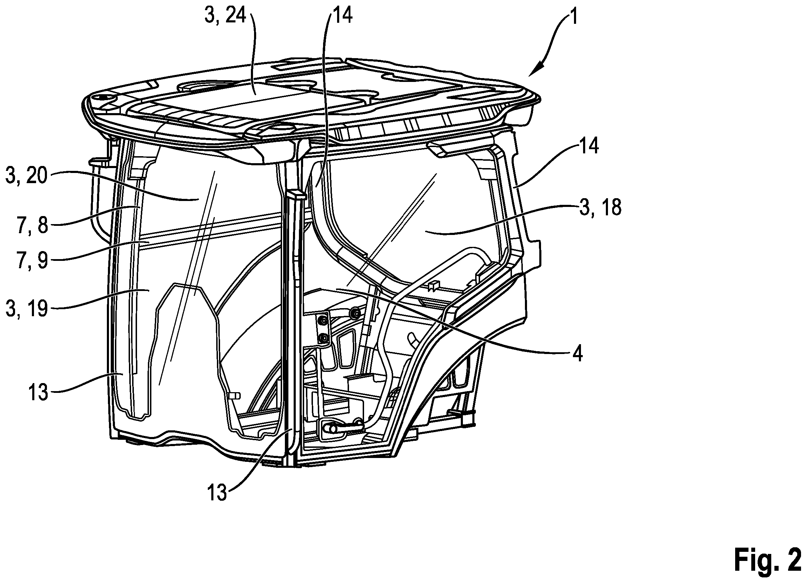

Ein Ausführungsbeispiel, das in den **Figuren 1 bis 5** dargestellt ist, betrifft eine Fahrzeugkabine **1** einer landwirtschaftlichen Arbeitsmaschine **2.** Die landwirtschaftliche Arbeitsmaschine **2** ist hier ein Traktor. Die Fahrzeugkabine **1** umfasst einen von Raumbegrenzungselementen **3** räumlich eingefassten Kabineninnenraum **4,** innerhalb dessen ein Fahrersitz **5** angeordnet ist, auf dem ein Fahrer der Arbeitsmaschine **2** während des bestimmungsgemäßen Betriebs der Arbeitsmaschine **2** sitzen kann. Vor dem Fahrersitz **5** befindet sich ein Lenkrad **21** zur Lenkung der Arbeitsmaschine **2.**

Eines der Raumbegrenzungselemente **3** ist von einer Windschutzscheibe **19** gebildet, die in Fahrtrichtung der Arbeitsmaschine **2** betrachtet ein vorderes Ende der Fahrzeugkabine **1** bildet. Der Fahrersitz **5** ist derart relativ zu der Windschutzscheibe **19** ausgerichtet, dass der Fahrer durch die Windschutzscheibe **19** nach vorne schaut, wenn er auf dem Fahrersitz **5** sitzt. Die Windschutzscheibe **19** erstreckt sich in horizontale Richtung zwischen zwei A-Säulen **13** der Fahrzeugkabine **1.** Diese bilden in Fahrtrichtung der Arbeitsmaschine **2** betrachtet eine vordere linke Ecke und eine vordere rechte Ecke der Fahrzeugkabine **1.** In dem gezeigten Ausführungsbeispiel werden im Weiteren die A-Säule **13,** die in Fahrtrichtung der Arbeitsmaschine **2** betrachtet die vordere linke Ecke der Fahrzeugkabine **1** bildet, als die erste A-Säule, und die A-Säule **13,** die die vordere rechte Ecke der Fahrzeugkabine **1** bildet, als die zweite A-Säule bezeichnet.

Analog zu den beiden A-Säulen **13** umfasst die Fahrzeugkabine 1 ferner zwei B-Säulen 14, die in Fahrtrichtung der Arbeitsmaschine **2** betrachtet eine hintere linke Ecke und eine hintere rechte Ecke der Fahrzeugkabine **1** bilden. In dem gezeigten Ausführungsbeispiel werden im Weiteren die B-Säule **14,** die in Fahrtrichtung der Arbeitsmaschine **2** betrachtet die hintere linke Ecke der Fahrzeugkabine **1** bildet, als die erste B-Säule, und die B-Säule **14,** die die hintere rechte Ecke der Fahrzeugkabine **1** bildet, als die zweite B-Säule bezeichnet.

Ein anderes der Raumbegrenzungselemente **3** ist von einer Seitenscheibe **20** gebildet, die sich in horizontale Richtung zwischen der zweiten A-Säule **13** und der zweiten B-Säule **14** der Fahrzeugkabine **1** erstreckt.

Zwischen der ersten A-Säule **13** und der ersten B-Säule **14** befindet sich ein weiteres Raumbegrenzungselement **3** in Form einer Tür **18.** Ferner erstreckt sich in horizontale Richtung zwischen den beiden B-Säulen **14** ein als Heckscheibe **17** ausgebildetes Raumbegrenzungselement **3.** Schließlich umfasst die Fahrzeugkabine **1** ferner ein Raumbegrenzungselement **3,** das von einem Dach **24** gebildet ist. Das Dach **24** bildet einen oberen Abschluss der Fahrzeugkabine **1** und wirkt mit allen vier Säulen **13, 14** der Fahrzeugkabine **1** zusammen bzw. ist auf diesen abgestützt.

In dem Kabineninnenraum **4** der Fahrzeugkabine **1** ist eine Halteeinrichtung **6** vorgesehen. Diese umfasst ein Schienensystem **7.** Das Schienensystem **7** umfasst wiederum hier und vorzugsweise insgesamt vier langgestreckte Schienen **8, 9, 10.** Diese Schienen **8, 9, 10** sind in dem gezeigten Beispiel mit identischen Schienenprofilen ausgebildet. Die Schienen **8, 9, 10** sind hier und vorzugsweise jeweils von Aluminiumstrangpressprofilen gebildet, deren Schienenprofil jeweils nach Art eines C-Profils ausgebildet ist. Mithin sind hier und vorzugsweise alle Schienen **8, 9, 10** des Schienensystems **7** in Form langgestreckter, einstückiger C-Profile ausgebildet.

Das Schienensystem **7** umfasst ferner eine Mehrzahl von Schlitten **11,** die mit dem Schienenprofil der Schienen **8, 9, 10** kompatibel sind. Die Schlitten **11** können stufenlos entlang der Schienen **8, 9, 10** bewegt und an den Schienen **8, 9, 10** arretiert werden, sodass sie in ihrer Position relativ zu der jeweiligen Schiene **8, 9, 10** feststehen. Die Schlitten **11** sind zur Aufnahme, Führung und Halterung von Komponenten **12** vorgesehen.

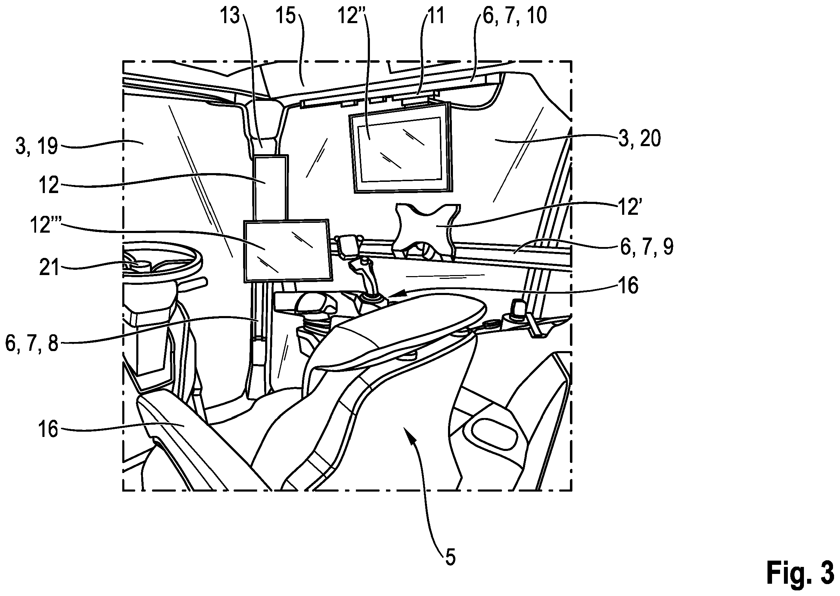

In dem gezeigten Beispiel ist eine erste Schiene **8** des Schienensystems **7** an der zweiten A-Säule **13** (vordere rechte Ecke der Fahrzeugkabine **1)** angeordnet. Diese erste Schiene **8** ist hier und vorzugsweise vertikal orientiert und mit der zweiten A-Säule **13** verschraubt. Ferner ist eine zweite Schiene **9** des Schienensystems **7** zwischen der zweiten A-Säule **13** und der zweiten B-Säule **14** angeordnet. Diese zweite Schiene **9** ist hier und vorzugsweise horizontal orientiert und von innen auf die Seitenscheibe **20** aufgesetzt. Sie ist hier und vorzugsweise mit der Seitenscheibe **20** verschraubt. Eine dritte Schiene **10** ist hier und vorzugsweise an einer Dachstruktur **15** des Daches **24** angeordnet. Hier und vorzugsweise erstreckt sich die dritte Schiene **10** parallel zu der zweiten Schiene **9** und befindet sich zwischen der zweiten A-Säule **13** und der zweiten B-Säule **14.** Entsprechend ist die dritte Schiene **10** hier und vorzugsweise ebenfalls horizontal orientiert. Dies ergibt sich besonders gut anhand von **Figur 3****.**

Schließlich umfasst das Schienensystem **7** in dem gezeigten Beispiel eine vierte Schiene, die an einer Armlehne **16** des Fahrersitzes **5** angeordnet ist. In den Figuren ist die vierte Schiene nicht als solche erkennbar, da sie beispielsweise in **Figur 3** von der Armlehne **16** selbst verdeckt ist, das heißt die vierte Schiene auf einer einer Sitzfläche des Fahrersitzes **5** abgewandten Seite der Armlehne **16** angeordnet ist. Die Orientierung der vierten Schiene im Raum gleicht somit zumindest im Wesentlichen der Orientierung der Armlehne **16,** die wiederum zumindest im Wesentlichen horizontal orientiert ist. Mithin ist hier und vorzugsweise auch die vierte Schiene zumindest im Wesentlichen horizontal orientiert. Die vierte Schiene ist hier und vorzugsweise an der Armlehne **16** angeordnet, die sich auf derselben Seite der Sitzfläche des Fahrersitzes **5** befindet wie die zweite Schiene **9.**

In dem gezeigten Beispiel umfasst das Schienensystem **7** insgesamt vier Schlitten **11,** von denen jeweils einer mit einer der vier Schienen **8, 9, 10** zusammenwirkt. Die Schlitten **11** weisen hier und vorzugsweise jeweils vier Bohrungen **22** auf, die dazu verwendbar sind, dass eine jeweilige Komponente **12** in Kraft übertragender Weise an den Schlitten **11** angeschlossen wird. Dies kann insbesondere in Form einer Verschraubung erfolgen, wobei die Bohrungen **22** hier und vorzugsweise jeweils ein Innengewinde aufweisen. Ferner weisen die Schlitten **11** jeweils einen Schnellspanner **23** auf, der händisch werkzeuglos bedient werden kann. Mittels des Schnellspanners **23** kann ein Reibschluss zwischen dem jeweiligen Schlitten **11** und der jeweiligen Schiene **8, 9, 10** hergestellt und der Schlitten **11** hierdurch relativ zu der Schiene **8, 9, 10** arretiert werden.

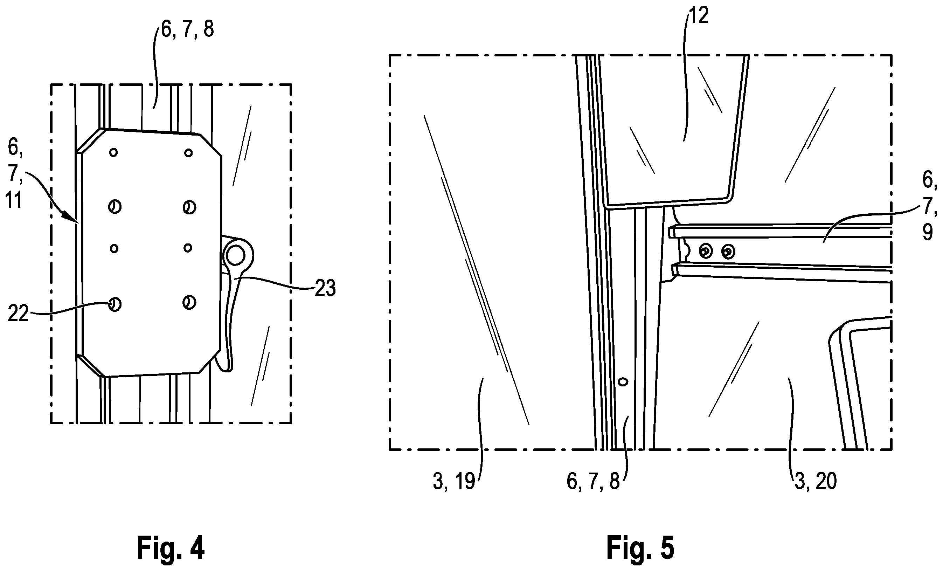

In dem gezeigten Beispiel ist eine erste Komponente **12** mittels eines ersten Schlittens **11** an der ersten Schiene **8** des Schienensystems **7** angeordnet. Diese erste Komponente **12** ist hier von einem vertikal orientierten Display sowie einer mit dem Display zusammenwirkenden, in den Figuren nicht erkennbaren Aufnahme gebildet, mittels der das Display an dem zugehörigen Schlitten **11** befestigt werden kann. Dies ergibt sich besonders gut anhand der **Figuren 3** **und** **5****.**

An der zweiten Schiene **9** ist ebenfalls ein Schlitten **11** und einen dem Schlitten **11** eine zweite Komponente **12'** angeordnet. Die zweite Komponente **12'** ist in dem gezeigten Beispiel von einer Aufnahme für ein Display gebildet. Die zweite Komponente **12'** stellt mithin gewissermaßen ein Zwischenstück zwischen dem Schlitten 11 und einem gegebenenfalls noch zu installierenden Display dar.

An der dritten Schiene **10** ist hier und vorzugsweise ebenfalls mittels eines Schlittens **11** eine von einem Display gebildete Komponente **12"** befestigt.

Schließlich ist mittels der vierten Schiene, die an der rechten Armlehne **16** des Fahrersitzes **5** angeordnet ist, eine weitere Komponente **12‴** in Form eines weiteren Displays angeordnet.

Allen Schlitten **11** ist gemeinsam, dass sie bei Bedarf an der jeweiligen Schiene **8, 9, 10** angeordnet bewegt bzw. verschoben, in beliebiger Position arretiert und vollständig von der Schiene **8, 9, 10** entfernt werden können. Der Fahrer hat auf diese Weise die Freiheit, seinen Arbeitsplatz in dem Kabineninnenraum **4** je nach Bedarf und persönlicher Vorliebe so zu gestalten, wie er sich das wünscht. Insbesondere bleibt dabei die Sicht durch die Windschutzscheibe **19** nach vorne frei, wie sich besonders gut anhand von **Figur 3** ergibt.

### Bezugszeichenliste

- 1: Fahrzeugkabine
- 2: Landwirtschaftliche Arbeitsmaschine
- 3: Raumbegrenzungselement
- 4: Kabineninnenraum
- 5: Fahrersitz
- 6: Halteeinrichtung
- 7: Schienensystem
- 8: Erste Schiene
- 9: Zweite Schiene
- 10: Dritte Schiene
- 11: Schlitten
- 12, 12', 12", 12‴: Komponente
- 13: A-Säule
- 14: B-Säule
- 15: Dachstruktur
- 16: Armlehne
- 17: Heckscheibe
- 18: Tür
- 19: Windschutzscheibe
- 20: Seitenscheibe
- 21: Lenkrad
- 22: Bohrung
- 23: Schnellspanner
- 24: Dach

## Patentansprüche

1. Fahrzeugkabine (1) für eine landwirtschaftliche Arbeitsmaschine (2), insbesondere für einen Traktor, die Fahrzeugkabine (1) umfassend
- einen von Raumbegrenzungselementen (3) räumlich begrenzten Kabineninnenraum (4),
- einen innerhalb des Kabineninnenraums (4) angeordneten Fahrersitz (5), auf dem ein Fahrer der Arbeitsmaschine (2) während des bestimmungsgemäßen Betriebs der Arbeitsmaschine (2) sitzen kann,
wobei eines der Raumbegrenzungselemente (3) von einer Windschutzscheibe (19) gebildet ist, die sich in horizontale Richtung zwischen zwei A-Säulen (13) der Fahrzeugkabine (1) erstreckt,
wobei ein anderes der Raumbegrenzungselemente (3) von einer Seitenscheibe (20) gebildet ist, die sich zwischen einer der A-Säulen (13) und einer B-Säule (14) der Fahrzeugkabine (1) erstreckt,
**dadurch gekennzeichnet, dass**
in dem Kabineninnenraum (4) der Fahrzeugkabine (1) eine Halteeinrichtung (6) vorgesehen ist, die ein Schienensystem (7) umfasst,
wobei das Schienensystem (7) zumindest zwei langgestreckte Schienen (8, 9, 10) mit identischem Schienenprofil sowie mindestens einen mit dem Schienenprofil kompatiblen Schlitten (11) zur Aufnahme, Führung und Halterung von Komponenten (12) aufweist,
wobei eine erste Schiene (8) an einer der A-Säulen (13) und eine zweite Schiene (9) zwischen dieser A-Säule (13) und der B-Säule (14) angeordnet sind.

2. Fahrzeugkabine (1) nach Anspruch 1, **dadurch gekennzeichnet, dass** die erste Schiene (8) zumindest im Wesentlichen vertikal orientiert ist.

3. Fahrzeugkabine (1) nach einem der vorhergehenden Ansprüche, **dadurch gekennzeichnet, dass** die zweite Schiene (9) auf der Seitenscheibe (20) verläuft und/oder zumindest im Wesentlichen horizontal orientiert ist.

4. Fahrzeugkabine (1) nach einem der vorhergehenden Ansprüche, **dadurch gekennzeichnet, dass** ein weiteres Raumbegrenzungselement (3) von einem Dach (24) gebildet ist, wobei das Schienensystem (7) eine weitere Schiene (10) umfasst, die an einer Dachstruktur (15) des Dachs (24) angeordnet ist und sich oberhalb der zweiten Schiene (9) erstreckt, wobei vorzugsweise diese weitere Schiene (10) parallel zu der zweiten Schiene (9) orientiert ist, wobei vorzugsweise diese weitere Schiene (10) horizontal orientiert ist.

5. Fahrzeugkabine (1) nach einem der vorhergehenden Ansprüche, **dadurch gekennzeichnet, dass** das Schienensystem (7) eine weitere Schiene umfasst, die an einer Armlehne (16) des Fahrersitzes (5) angeordnet ist, wobei vorzugsweise diese weitere Schiene zumindest im Wesentlichen horizontal orientiert ist.

6. Fahrzeugkabine (1) nach einem der vorhergehenden Ansprüche, **dadurch gekennzeichnet, dass** das Schienenprofil zumindest eine der Schienen (8, 9, 10), vorzugsweise mehrere Schienen (8, 9, 10), weiter vorzugsweise alle Schienen (8, 9, 10), nach Art eines C-Profils ausgebildet ist.

7. Fahrzeugkabine (1) nach einem der vorhergehenden Ansprüche, **dadurch gekennzeichnet, dass** zumindest eine der Schienen (8, 9, 10), vorzugsweise mehrere Schienen (8, 9, 10), weiter vorzugsweise alle Schienen (8, 9, 10), einstückig ausgebildet ist, wobei vorzugsweise die Schienen (8, 9, 10) jeweils von einem Aluminiumstrangpressprofil gebildet sind.

8. Fahrzeugkabine (1) nach einem der vorhergehenden Ansprüche, **dadurch gekennzeichnet, dass** alle Schienen (8, 9, 10) dasselbe Schienenprofil aufweisen.

9. Fahrzeugkabine (1) nach einem der vorhergehenden Ansprüche, **dadurch gekennzeichnet, dass** der mindestens eine Schlitten (11) entlang einer jeweiligen Schiene (8, 9, 10) beweglich und werkzeuglos an der Schiene (8, 9, 10) befestigbar sind.

10. Landwirtschaftliche Arbeitsmaschine (2), insbesondere Traktor, umfassend eine Fahrzeugkabine (1),
**dadurch gekennzeichnet, dass**
die Fahrzeugkabine (1) gemäß einem der vorhergehenden Ansprüche ausgebildet ist.
